(19) Europäisches Patentamt
European Patent Office
Office européen des brevets

(11) EP 2 985 307 B1

(12) EUROPEAN PATENT SPECIFICATION

(45) Date of publication and mention of the grant of the patent:
**02.10.2019 Bulletin 2019/40**

(21) Application number: **14782620.0**

(22) Date of filing: **27.03.2014**

(51) Int Cl.:
***C08J 3/24*** (2006.01) ***C08K 5/14*** (2006.01)
***C08K 5/3492*** (2006.01) ***C08L 27/12*** (2006.01)
***C08F 259/08*** (2006.01)

(86) International application number:
**PCT/JP2014/001786**

(87) International publication number:
**WO 2014/167797 (16.10.2014 Gazette 2014/42)**

# (54) METHOD FOR PRODUCING CROSSLINKED FLUOROELASTOMER

VERFAHREN ZUR HERSTELLUNG VON VERNETZTEM FLUORELASTOMER

PROCÉDÉ DE PRODUCTION DE FLUOROÉLASTOMÈRE RÉTICULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.04.2013 JP 2013081478**

(43) Date of publication of application:
**17.02.2016 Bulletin 2016/07**

(73) Proprietor: **Nichias Corporation**
**Tokyo 104-8555 (JP)**

(72) Inventors:
- **SHIMIZU, Tomoya**
  **Tokyo 104-8555 (JP)**
- **MAEZAWA, Ayumi**
  **Tokyo 104-8555 (JP)**
- **SEKIMOTO, Yuriko**
  **Tokyo 104-8555 (JP)**
- **KUZAWA, Naoya**
  **Tokyo 104-8555 (JP)**

(74) Representative: **Schmitz, Joseph**
**Isler & Pedrazzini AG**
**Giesshübelstrasse 45**
**Postfach 1772**
**8027 Zürich (CH)**

(56) References cited:
**EP-A1- 0 570 254**
**WO-A1-00/04084**
**WO-A1-00/04091**
**WO-A1-98/00407**
**JP-A- H01 294 709**
**JP-A- 2000 502 122**
**US-A- 5 696 189**
**US-A1- 2005 282 969**
**US-B1- 6 191 233**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The invention relates to a method for producing a cross-linked fluoroelastomer and a cross-linked fluoroelastomer obtained by this method.

### Background Art

Water vapor is used in various applications such as bacteria removal, washing or the like in addition to power generation in various industries including plants, machinery, foodstuff and health care. A sealing material such as a rubber O-ring is used in a pipe or an apparatus through which the water vapor flows, and serves to prevent leakage of water vapor to the outside.

In recent years, in power generation plants, in order to improve power generation efficiency, there has been a tendency of increasing the temperature of water vapor than before. With this tendency, a sealing material is required to have resistance to high-temperature water vapor. In such cases, a sealing material made of cross-linked fluoroelastomer such as fluororubber and perfluororubber that has excellent heat resistance is often used. However, while a sealing material made of the cross-linked fluoroelastomer has excellent heat resistance, it may have poor resistance to vapor, and hence, improvement is required in this respect (see Patent Document 1, for example).

### Related Art Document

### Patent Document

Patent Document 1: JP-A-2006-9010

US 6 191 233 B1 relates to a method of producing a seaing material comprising a perfluoroelastomer, a cross-linking agent and an initiator. The cross-linking agent was included in 100 parts by weight of the perfluoroelastomer in an amount of 1 to 6 parts by weight and the cross-linking agent was 1,3,5-Tris(2, 3, 3-trifluoro-2-propenyl)-1,3,5-triazine-2,4,6-trione. The initiator was included in an amount of 1.5 to 4 parts by weight and was Perhexa 25B.

US 5 696 189 A relates to a method of producing a sealing material comprising a perfluoroelastomer, a cross-linking agent and an initiator. The cross-linking agent was included in the perfluoroelastomer in an amount of 1 parts per hundred rubber and the cross-linking agent was triallyl isocyanurate. The initiator was included in an amount of 1 parts per hundred rubber and was a peroxide initiator.

EP 0 570 254 A1 relates to a coating composition comprising a fluoroelastomer (FLUOREL 2230), a crosslinking agent (TMPTA) and an initiator (IRGACURE 184).

US 2005/282969 A1 discloses a method of producing a cross-linked fluoroelastomer, which comprisies cross-linking a fluoroelastomer with a cross-linking agent in the presence of an initiator. The cross-linking agent is a $CH_2$=CH-$(CF_2)_6$7CH=$CH_2$.

### Summary of the Invention

The invention has been made in view of the above-mentioned problems, and one object thereof is to provide a cross-linked fluoroelastomer having improved vapor resistance and a production method thereof.

Further, one object of the invention is to provide a novel cross-linking agent.

According to one aspect of the invention, a method for producing a cross-linked fluoroelastomer comprising cross-linking a fluoroelastomer with a cross-linking agent in an inert atmosphere in the presence of an initiator is provided, wherein the cross-linking agent being one or more selected from the group consisting of a compound of formula (1),

$$R_1R_2C=C(R_3)-(CH_2)_m-(O)_cZ-(O),-(CH_2)_m-C(R_4)=CR_5R_6 \qquad (1)$$

wherein in forumula (1), $R_1$, $R_2$, $R_3$, $R_4$, $R_5$ and $R_6$ are fluorine;
Z is a divalent linkage group; m is independently 0 or 1; and n is independently 0 or 1;

compounds of formulas (i) to (vii),

$$CH_2=CH-(CF_2)_x-CH=CH_2 \qquad (i)$$

$CH_2=CH-CH_2-(CF_2)_x-CH_2-CH=CH_2$ (ii)

$CF_2=CH-(CF_2)_x-CH=CF_2$ (iii)

$CF_2=CH-CH_2-(CF_2)_x-CH_2-CH=CF_2$ (iv)

$CF_2=CH-O-(CF_2))_xO-CH=CF_2$ (v)

$CF_2=CF-O-(CF_2)_x-O-CF=CF_2$ (vi)

$CF_2=CF-(CF_2)_x-CF=CF_2$ (vii)

wherein in formulas (i) to (vii), x is 2 to 24; and
compounds of formulas (B) and (C),

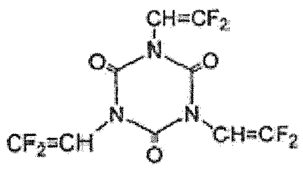

(B)

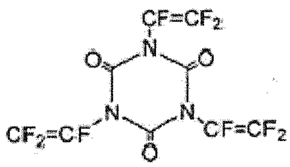

(C)

According to another aspect of the invention, a cross-linked fluoroelastomer that is obtained by the above-mentioned production method and a formed product obtained from the cross-linked fluoroelastomer are provided.

According to the invention, it is possible to provide a cross-linked fluoroelastomer having improved vapor resistance and a production method thereof.

Mode for Carrying out the Invention

One embodiment of the invention will be explained below. The invention is not restricted to this embodiment.

The method for producing a fluoroelastomer according to one embodiment of the invention comprises cross-linking a fluoroelastomer with a cross-linking agent in an inert gas atmosphere in the presence of an initiator. By cross-linking in an inert gas atmosphere, vapor resistance is significantly improved.

As the inert gas, nitrogen, helium, argon or the like can be used. Among them, nitrogen is preferable. In the inert gas atmosphere, the oxygen concentration is preferably 10 ppm or less, more preferably 5 ppm or less.

The fluoroelastomer may be a perfluoroelastomer, or may be a partially-fluorinated elastomer.

For example, the following monomer-derived repeating units can be exemplified. The fluoroelastomer may contain one or two or more monomer-derived repeating units.

$CF_2=CH_2$ (vinylidene fluoride),

$CF_2=CF_2$ (tetrafluoroethylene),

$CF_2=CFCF_3$ (hexafluoropropylene),

$CH_2=CH_2$,

$CH_2=CHCH_3$

The fluoroelastomer used in the invention preferably comprises, as a part to be attacked by radicals at the time of cross-linking (curing), iodine and/or bromine, more preferably iodine. A perfluoroelastomer that can be cured by a peroxidizing method is described in Patent Document 1, or the like, for example.

In general, a perfluoroelastomer comprises iodine in an amount of 0.001 wt% to 5 wt%, preferably 0.01 to 2.5 wt%, relative to the total weight of the polymer. Iodine atoms can be present along the chain and/or at the terminal.

It is preferred that a perfluoroelastomer be produced from a copolymer such as perfluorinated olefin having an ethylenic unsaturated bond, preferably at its terminal.

As a comonomer, the following can be exemplified.

$CF_2$=$CFOR_{2f}$ (per)fluoroalkylvinylether (PAVE)

(In the formula, $R_{2f}$ is a (per)fluoroalkyl having 1 to 6 carbon atoms, e.g. trifluoromethyl or pentafluoropropyl)

$CF_2$=$CFOX_o$ (per)fluorooxyalkylvinylether

(in the formula, $X_0$ is a (per)fluorooxyalkyl having 1 to 12 carbon atoms and comprising one or more ether groups, e.g. perfluoro-2-propoxypropyl)

$CFX_2=CX_2OCF_2OR''_f$ (I-B)

(in the formula, $R''_f$ is a linear or branched (per)fluoroalkyl having 2 to 6 carbon atoms, a cyclic (per)fluoroalkyl having 5 or 6 carbon atoms or a linear or branched (per)fluorooxyalkyl having 2 to 6 carbon atoms that include 1 to 3 oxygen atoms, and $X_2$ is F or H)

The (per)fluorovinylether represented by the formula (I-B) is preferably represented by the following formula:

$CFX_2=CX_2OCF_2OCF_2CF_2Y$ (II-B)

(in the formula, Y=F or $OCF_3$; and $X_2$ is as defined above)

The perfluorovinylether represented by the following formula is more preferable.

$CF_2=CFOCF_2OCF_2CF_3$ (MOVE1)

$CF_2=CFOCF_2OCF_2CF_2OCF_3$ (MOVE2)

As the preferable monomer composition, the following can be exemplified.
Tetrafluoroethylene (TFE): 50 to 85 mol%, PAVE: 15 to 50 mol%,
TFE: 50 to 85 mol%, MOVE: 15 to 50 mol%

The perfluoroelastomer may contain a vinylidene fluoride-derived unit, a fluoroolefin having 3 to 8 carbon atoms and may contain chlorine and/or bromine, or a non-fluorinated olefin having 3 to 8 carbon atoms.

As the cross-linking agent, a cross-linking agent represented by the following formula can be used:

$R_1R_2C=C(R_3)-(CH_2)_m-(O)_n-Z-(O)_n-(CH_2)_m-C(R_4)=CR_5R_6$ (1)

wherein in formula (1), $R_1$, $R_2$, $R_3$, $R_4$, $R_5$ and $R_6$ are fluorine; Z is a divalent linkage group; m is independently 0 or 1; and n is independently 0 or 1.

The following cross-linking agents (2) to (4) can be exemplified.

$R_1R_2C=C(R_3)-(O)_n-Z-(O)_n-C(R_4)=CR_5R_e$ (2)

$R_1R_2C=C(R_3)-(CH_2)_m-Z-(CH_2)_m-C(R_4)=CR_5R_6$ (3)

$R_1R_2C=C(R_3)-Z-C(R_4)=CR_5R_6$ (4)

(in the formula, $R_1$, $R_2$, $R_3$, $R_4$, $R_5$ and $R_6$, Z, m and n are as defined above)

$R_1$, $R_2$, $R_3$, $R_4$, $R_5$ and $R_6$ are fluorine.

Z is preferably a linear or branched alkylene having 1 to 18 carbon atoms or cycloalkylene and may optionally contain an oxygen atom. A part or all of them may be fluorinated. For example, Z is a (per)fluoropolyoxyalkylene group.

Z is more preferably a perfluoroalkylene group having 4 to 12 carbon atoms, with 4 to 8 carbon atoms being

further preferable.

When Z is a (per)fluoropolyoxyalkylene group, it may contain one or more groups selected from the following:

$-CF_2CF_2O-$, $-CF_2CF(CF_3)O-$, $-CFX_1O-$ (in the formula, $X_1$=F or $CF_3$),
$-CF_2CF_2CF_2O-$, $-CF_2-CH_2CH_2O-$, $-C_3F_6O-$

Z is preferably a group represented by the following formula:

$$-(Q)_p-CF_2O-(CF_2CF_2O)_m(CF_2O)_n-CF_2-(Q)_p- \qquad (II)$$

(in the formula, Q is alkylene or oxyalkylene group having 1 to 10 carbon atoms, p is 0 or 1, and m and n is independently a number that allows a m/n ratio to be 0.2 to 5)

Preferably, Q is selected from the following.

$-CH_2OCH_2-$, $-CH_2O(CH_2CH_2O)_sCH_2-$ (in the formula, s=1 to 3)

As specific cross-linking agents (i) to (vii) and (B) and (C), the following can be exemplified.

$$CH_2=CH-(CF_2)_X-CH=CH_2 \qquad (i)$$

$$CH_2=CH-CH_2-(CF_2)_x-CH_2-CH=CH_2 \qquad (ii)$$

$$CF_2=CH-(CF_2)_X-CH=CF_2 \qquad (iii)$$

$$CF_2=CH-CH_2-(CF_2)_X-CH_2-CH=CF_2 \qquad (iv)$$

$$CF_2=CH-O-(CF_2)_X-O-CH=CF_2 \qquad (v)$$

$$CF_2=CF-O-(CF_2)_X-O-CF=CF_2 \qquad (vi)$$

$$CF_2=CF-(CF_2)_X-CF=CF_2 \qquad (vii)$$

(in the formulas, x is 2 to 24)

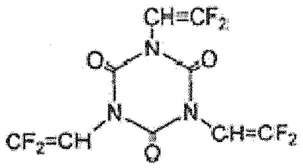

(B)

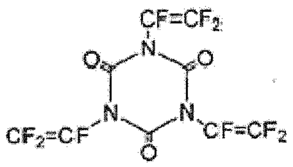

(C)

The cross-linking agent is added in an amount of preferably 0.5 to 15 mmol, more preferably 1 to 8 mmol, and further preferably 1.5 to 5 mmol relative to 100g of the fluoroelastomer. A larger amount added tends to lead to more improved vapor resistance and heat resistance. However, if the amount of the cross-linking agent is too large, the cross-linked fluoroelastomer may tend to be hard.

As the initiator, one that is normally used can be used. For example, a peroxide, an azo compound or the like can be exemplified.

The initiator is added in an amount of preferably 0.3 to 15 mmol, more preferably 1 to 10 mmol, and further preferably 1.5 to 8 mmol relative to 100g of the fluoroelastomer. If a large amount of the initiator is added, vapor resistance and heat resistance may likely improve. However, if the amount is too large, scorching or bubbling may occur.

A filler may be added to the above-mentioned fluoroelastomer compositionin order to improve the mechanical strength. As long as the advantageous effects of the invention are not impaired, a filler that is commonly known as a

filler for the elastomer can be used. For example, carbon black, silica, barium sulfide, titanium dioxide, semi-crystalline fluoropolymer and perfluoropolymer can be given.

According to need, a thickening agent, a pigment, a coupling agent, an anti-oxidant, a stabilizer or the like can be incorporated in an appropriate amount.

As for the cross-linking conditions, it is preferable to heat at 100 to 250°C for 10 minutes to 5 hours. Normally, as the primary cross-linking, raw materials are put in a mold and the raw materials are then subjected to cross-linking while being subjected to press forming. The primary cross-linking is conducted by heating at 150 to 200°C for 5 to 60 minutes. Thereafter, the raw materials are removed from the mold, and subjected to secondary cross-linking in an inert gas atmosphere. The secondary cross-linking is conducted by heating at 150 to 300°C for 1 to 100 hours, for example. The cross-linking can be conducted by using an electric furnace or the like. By applying thermal history through the secondary cross-linking, deformation or the like during use can be prevented.

A formed product of the cross-linked fluoroelastomer of the invention can be produced by the following method, for example.

After kneading a fluoroelastomer in which a cross-linking agent has been internally filled, an initiator and one or two or more types of carbon black (filler)) in an open roll, the resulting kneaded product is put in a mold. After subjecting the kneaded product to a heat treatment in the air, the resultant product is subjected to primary cross-linking while being subjected to press forming. Then, the resulting formed product is removed from the mold, and is then subjected to a heat treatment in a nitrogen atmosphere or in the air.

In this case, the amount of the initiator is preferably 0.1 to 4.0 phr and the amount of carbon black (filler) is preferably 0.1 to 50 phr relative to 100 parts by mass of the fluoroelastomer (when two or more carbon blacks are used, the amounts of these two or more carbon blacks may be almost equal).

The cross-linked fluoroelastomer that is obtained by the production method of the invention can be used as a sealing material, and can be used in the form of a formed product such as a gasket and a seal ring.

According to the production method of the invention, a formed product having a percentage change in swelling ratios of 100% or less before and after exposure to saturated vapor of 300°C for 70 hours can be obtained. The swelling ratios are measured by the method described in the Examples. The percentage change in swelling ratios is preferably 90% or less, more preferably 80% or less. Further, according to the production method of the invention, a formed product having a percentage change in swelling ratios of 45% or less before and after exposure to saturated vapor of 250°C for 70 hours can be obtained. The swelling ratios are measured by the method described in the Examples. The change in swelling ratios is preferably 40% or less, more preferably 38% or less.

Further, a formed product having a compression permanent strain measured by the method described in the Examples of 50% or less can be obtained. The compression permanent strain is preferably 40% or less, more preferably 38% or less.

EXAMPLES

Production Example 1

Perfluorosebacic acid $HOOC(CF_2)_8COOH$ (10 mmol) and sodium hydroxide NaOH (20 mmol) were reacted in water, whereby a sodium salt of perfluorosebacic acid $NaOOC(CF_2)_8COONa$ was obtained. $NaOOC(CF_2)_8COONa$ was re-crystallized from methanol, and the resulting crystals were dried under reduced pressure at 100°C for 12 hours. Then, an appropriate amount of benzene was added. By means of a Dean-stark apparatus, the resultant was stirred at 100°C for 24 hours. Then, benzene was removed under reduced pressure, and vacuum-dried at room temperature for 24 hours. Thereafter, $NaOOC(CF_2)_8COONa$ was decarboxylated by heating to 350°C under reduced pressure. By using a dry ice strap, an intended $CF_2=CF-(CF_2)_4-CF=CF_2$ was obtained. The resultant was analyzed by $^{19}F$-NMR, and $^{19}F$-NMR(δppm):-88.2(2F), -105.6(2F), -119.5(4F), -125.2(4F) and -189.8(2F) were observed. It was confirmed to be $CF_2=CF-(CF_2)_4-CF=CF_2$.

Experimental Example 1

PFR94 (manufactured by Solvey Japan, Ltd.) (fluoroelastomer), perhexa 25B (manufactured by NOF Corporation) (initiator), fluorinated diene (1,6-divinylperfluorohexane) ($CH_2=CH-(CF_2)_6-CH=CH_2$) (cross-linking agent) were kneaded in an open roll. The kneaded product was put in a mold, and subjected to a heat treatment in the air at 170°C for 15 minutes, whereby primary cross-linking was conducted while performing press forming. Subsequently, the formed product was removed from the mold, and then subjected to a heat treatment (rising temperature for 8 hours) at 290°C for 16 hours in a nitrogen atmosphere (oxygen concentration: 5 ppm) or in the air, whereby a formed product of a cross-linked fluoroelastomer was obtained. The formed product was in the form of an O-ring (AS568-214; inner diameter 24.99 mm, thickness 3.53 mm).

The amounts of the initiator and the cross-linking agent relative to the fluoroelastomer ("mmol" relative to 100g of the fluoroelastomer and "part by mass" (phr) relative to 100 parts by mass of the fluoroelastomer were both indicated) were changed as shown in Tables 1 and 2.

For the resulting secondary cross-linked fluoroelastomer, the following evaluation was conducted.

(1) Swelling ratio

The O-ring was cut in a length of about 10 mm, and the resultant was immersed in a perfluorocarbon solution (Fluorinate FC-3283, manufactured by 3M Japan) at room temperature (21 to 25°C, preferably 23°C) for one week. Change in volume before and after the test was obtained by calculation.

$$\text{Swelling ratio[\%]} = \frac{(\text{Volume after test}) - (\text{Volume before test})}{(\text{Volume before test})} \times 100$$

The results are shown in Table 1. In the table, the upper value indicates the value of the cross-linked fluoroelastomer after the secondary cross-linking in the air and the lower value indicates the value of the secondary cross-linked fluoroelastomer after the secondary cross-linking in a nitrogen atmosphere. The swelling ratio is an index for the cross-linking density. Since the value after the secondary cross-linking in a nitrogen atmosphere is smaller than the value after the secondary cross-linking in the air, it can be understood that a higher cross-linking density can be obtained when secondary cross-linking is conducted in a nitrogen atmosphere.

(2) Compression permanent strain (CS)

The O-ring was compressed by 25%, and treated at 250°C for 70 hours. Then, the O-ring was released and left stand at room temperature for 30 minutes. In accordance with the JIS standard (JIS K6262), the thickness before and after the test was measured, and the compression permanent strain was calculated according to the following formula.

$$\text{Compression permanent strain [\%]} = \frac{(\text{Thickness before test}) - (\text{Thickness after test})}{(\text{Thickness before test}) - (\text{Thickness of spacer})} \times 100$$

The results are shown in Table 2. A smaller value indicates an excellent heat resistance. In the table, the upper value indicates the value of the cross-linked fluoroelastomer after the secondary cross-linking in the air and the lower value indicates the value of the cross-linked fluoroelastomer after the secondary cross-linking in a nitrogen atmosphere.

Table 1

| Swelling ratio | | | Perhexa 25B | | | |
|---|---|---|---|---|---|---|
| | | | 0.7 | 1.4 | 2.1 | phr |
| | | | 2.4 | 4.8 | 7.2 | mmol |
| Fluorinated diene | 1 | 2.8 | 818 | 219 | 185 | Secondary cross-linking(Air) |
| | | | 175 | 204 | 166 | Secondary cross-linking(N2) |
| | 2 | 5.6 | 536 | 195 | 181 | |
| | | | 157 | 141 | 148 | |
| | 3 | 8.5 | 820 | 173 | 175 | |
| | | | 159 | 136 | 141 | |
| | phr | mmol | | | | |

Table 2

| CS | | | Perhexa 25B | | | |
|---|---|---|---|---|---|---|
| | | | 0.7 | 1.4 | 2.1 | phr |
| | | | 2.4 | 4.8 | 7.2 | mmol |
| Fluorinated diene | 1 | 2.8 | — | 84 | 33 | Secondary cross-linking (Air) |
| | | | 31 | 32 | — | Secondary cross-linking (N2) |
| | 2 | 5.6 | — | 54 | 40 | |
| | | | 23 | 38 | 40 | |
| | 3 | 8.5 | — | 37 | 43 | |
| | | | 25 | 36 | 46 | |
| | phr | mmol | | | | |

From Table 2, it can be understood that a cross-linked fluoroelastomer having excellent heat resistance can be obtained when cross-linking is conducted in a nitrogen atmosphere.

Experimental Example 2

In the same manner as in Experimental Example 1, PFR94, Perhexa 25B and fluorinated diene were subjected to a heat-treatment at 170°C for 15 minutes in the air. Subsequently, the resultant was subjected to a heat treatment at 290°C for 16 hours (secondary cross-linking) in a nitrogen atmosphere (oxygen concentration: 5 ppm) or in the air.

The amount of the initiator and the amount of the cross-linking agent, each relative to 100g of the fluoroelastomer, were 4.8 mmol (1.4 phr) and 4.2 mmol (1.5 phr), respectively.

In the same manner as in Experimental Example 1, for the resulting cross-linked fluoroelastomer after the secondary cross-linking, the swelling ratio and the compression permanent strain (CS) were evaluated.

Further, for the cross-linked fluoroelastomer after the secondary cross-linking, a vapor test was conducted. From the ratio in percentage change in swelling ratio (swelling ratio percentage change) before and after exposure for 70 hours to saturated water vapor of 300°C, vapor resistance was evaluated. The results are shown in Table 3.

$$\text{Percentage change in swelling ratio } [\%] = \frac{(\text{Swelling ratio after vapor test}) - (\text{Swelling ratio before vapor test})}{(\text{Swelling ratio before vapor test})} \times 100$$

Table 3

| Secondary cross-linking atmosphere | Air | N2 |
|---|---|---|
| Swelling ratio [%] before vapor test | 174 | 146 |
| CS [%] 250°C × 70 h | 30 | 28 |
| Swelling ratio [%] after vapor test 300°C × 70 h | 541 | 256 |
| Percentage change in swelling ratio | 210 | 76 |

From Table 3, it can be understood that, by cross-linking in a nitrogen atmosphere, a cross-linked fluoroelastomer that has not only excellent heat resistance but also excellent vapor resistance can be obtained.

Experimental Example 3 (Comparative)

PFR94 (manufactured by Solvey Japan, Ltd.) (fluoroelastomer), perhexa 25B (manufactured by NOF Corporation) (initiator) and TAIC (manufactured by Nippon Kasei Chemical Co., Ltd.) (cross-linking agent) were kneaded in an open roll. The kneaded product was put in a mold, and subjected to a heat treatment in the air at 160°C for 15 minutes, whereby primary cross-linking was conducted while performing press forming. Subsequently, the formed product was removed from the mold, and then subjected to a heat treatment at 230°C for 8 hours in a nitrogen atmosphere (oxygen concentration: 5 ppm) or in the air, whereby a formed product of a cross-linked fluoroelastomer was obtained. The formed product was in the form of an O-ring (AS568-214).

The amount of the initiator and the amount of the cross-linking agent, each relative to 100g of the fluoroelastomer, were 3.4 mmol (1 phr) and 8.0 mmol (2 phr), respectively.

For the cross-linked fluoroelastomer after the secondary cross-linking, the swelling ratio and the compression permanent strain (CS) were evaluated in the same manner as in Experimental Example 1.

Further, for the cross-linked fluoroelastomer after the secondary cross-linking, a vapor test was conducted. From the percentage change in swelling ratios (swelling percentage ratio) before exposure to saturated water vapor of 250°C for 70 hours and after exposure to saturated water vapor of 250°C for 70 hours, vapor resistance was evaluated.

The results are shown in Table 4.

Experimental Example 4 (Comparative)

An O-ring was prepared and evaluated in the same manner as in Experimental Example 3, except that G912 (manufactured by Daikin Industries, Inc.) (fluoroelastomer) was used instead of PFR94.

The results are shown in Table 4. The "-" (hyphen) in Table 4 means that measurement could not be conducted since the sample was broken after the vapor test.

Table 4

| Secondary cross linking atmosphere | Air | N2 | Air | N2 |
|---|---|---|---|---|
| Composition | PFR94 +25B 3.4 mmol (1 phr) +TAIC 8.0 mmol (2 phr) | | G912 +25B 3.4 mmol (1 phr) +TAIC 8.0 mmol (2 phr) | |
| Swelling ratio [%] before vapor test | 100 | 96 | 276 | 265 |
| CS[%] 250°C × 70 h | 16 | 14 | 51 | 42 |
| Swelling ratio [%] after vapor test 250°C × 70 h | 154 | 129 | - | 308 |
| Percentage change [%] in swelling ratio | 54 | 34 | - | 16 |

From Table 4, it can be understood that, by cross-linking in a nitrogen atmosphere, a cross-linked fluoroelastomer that has not only excellent heat resistance but also excellent vapor resistance can be obtained.

Experimental Example 5

100 parts by mass of PFR95HT (manufactured by Solvey Japan, Ltd.) in which a cross-linking agent was filled, 0.75 phr of Perhexa 25B (manufactured by NOF Corporation) (initiator), 7 phr of MT Carbon N 990 (manufactured by Cancarb Ltd.) (carbon black (filler)) and 8 phr of Austin Black (manufactured by Coal Fillers, Inc.) (carbon black) were kneaded in an open roll. The kneaded product was put in a mold, and subjected to a heat treatment in the air, whereby primary cross-linking was conducted while performing press molding. Subsequently, the formed product was removed from the mold, and then subjected to a heat treatment in a nitrogen atmosphere or in the air, whereby a cross-linked fluoroelastomer was obtained.

Industrial Applicability

The fluoroelastomer of the invention can be widely used as a sealing material for which vapor resistance is required.

## Claims

1. A method for producing a cross-linked fluoroelastomer, which comprises cross- linking a fluoroelastomer with a cross-linking agent in an inert gas atmosphere in the presence of an initiator, the cross-linking agent being one or more selected from the group consisting of a compound of formula (1),

$$R_1R_2C{=}C(R_3)\text{-}(CH_2)_m\text{-}(O)_n\text{-}Z\text{-}(O)_n\text{-}(CH_2)_m\text{-}C(R_4){=}CR_5R_6 \qquad (1)$$

wherein in forumula (1), $R_1$, $R_2$, $R_3$, $R_4$, $R_5$ and $R_6$ are fluorine; Z is a divalent linkage group; m is independently 0 or 1; and n is independently 0 or 1;

compounds of formulas (i) to (vii),

$$CH_2{=}CH\text{-}(CF_2)_x\text{-}CH{=}CH_2 \qquad (i)$$

$$CH_2{=}CH\text{-}CH_2\text{-}(CF_2)_x\text{-}CH_2\text{-}CH{=}CH_2 \qquad (ii)$$

$$CF_2{=}CH\text{-}(CF_2)_x\text{-}CH{=}CF_2 \qquad (iii)$$

$$CF_2{=}CH\text{-}CH_2\text{-}(CF_2)_x\text{-}CH_2\text{-}CH{=}CF_2 \qquad (iv)$$

$$CF_2{=}CH\text{-}O\text{-}(CF_2)_x\text{-}O\text{-}CH{=}CF_2 \qquad (v)$$

$$CF_2{=}CF\text{-}O\text{-}(CF_2)_x\text{-}O\text{-}CF{=}CF_2 \qquad (vi)$$

$$CF_2{=}CF\text{-}(CF_2)_x\text{-}CF{=}CF_2 \qquad (vii)$$

wherein in formulas (i) to (vii), x is 2 to 24; and compounds of formulas (B), and (C),

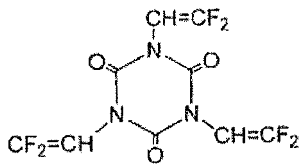

(B)

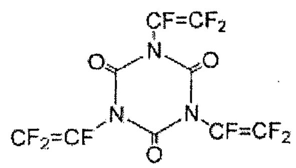

(C)

2. The method for producing a cross-linked fluoroelastomer according to claim 1, wherein the inert gas atmosphere is a nitrogen atmosphere.

3. The method for producing a cross-linked fluoroelastomer according to claim 1 or 2, wherein the fluoroelastomer is a perfluoroelastomer or a partially-fluorinated elastomer.

4. The method for producing a cross-linked fluoroelastomer according to any one of claims 1 to 3, wherein Z is an alkylene group having 1 to 18 carbon atoms in which a part or all thereof is fluorinated.

5. The method for producing a cross-linked fluoroelastomer according to any one of claims 1 to 4, wherein the cross-linking agent is added in an amount of 0.5 to 15 mmol relative to 100g of the fluoroelastomer.

6. The method for producing a cross-linked fluoroelastomer according to any one of claims 1 to 5, wherein the initiator is added in an amount of 0.3 to 15 mmol relative to 100g of the fluoroelastomer.

7. The method for producing a cross-linked fluoroelastomer according to any one of claims 1 to 6, wherein formula (1) is one of the following formulas (2) to (4)

$$R_1R_2C=C(R_3)-(O)_n-Z-(O)_n-C(R_4)=CR_5R_6 \quad (2)$$

$$R_1R_2C=C(R_3)-(CH_2)_m-Z-(CH_2)_m-C(R_4)=CR_5R_6 \quad (3)$$

$$R_1R_2C=C(R_3)-Z-C(R_4)=CR_5R_6 \quad (4)$$

wherein in the formulas (2) to (4), $R_1$, $R_2$, $R_3$, $R_4$, $R_5$ and $R_6$, Z, m, and n are the same as in the formula (1).

8. The method for producing a cross-linked fluoroelastomer according to any one of claims 1 to 6, wherein the cross-linking agent is one or more selected from the group consisting of the following compounds

$$CF_2=CF-(CF_2)_x-CF=CF_2,$$

$$CF_2=CH-(CF_2)_x-CH=CF_2,$$

and

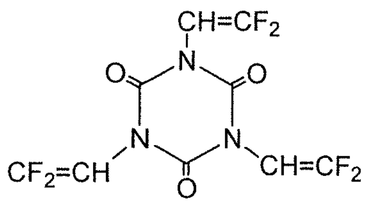

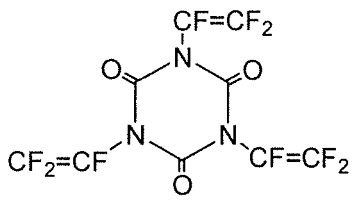

wherein x is 2 to 24.

9. A cross-linked fluoroelastomer that is obtained by the production method according to any one of claims 1 to 8.

10. A formed product obtained from the cross-linked fluoroelastomer according to claim 9.

11. A formed product according to claim 10 that is a sealing material.

## Patentansprüche

1. Verfahren zur Herstellung eines vernetzten Fluorelastomers, umfassend die Vernetzung eines Fluorelastomers mit einem Vernetzungsmittel in einer Schutzgas-Atmosphäre in Gegenwart eines Initiators,
wobei das Vernetzungsmittel ein oder mehrere ausgewählt aus der Gruppe bestehend aus eine Verbindung der Formel (1),

$$R_1R_2C=C(R_3)-(CH_2)_m-(O)_n-Z-(O)_n-(CH_2)_m-C(R_4)=CR_5R_6 \quad (1)$$

wobei in Formel (1) $R_1$, $R_2$, $R_3$, $R_4$, $R_5$ und $R_6$ Fluor sind; Z eine zweiwertige Verknüpfungsgruppe ist; m unabhängig 0 oder 1 ist; und n unabhängig 0 oder 1 ist;
Verbindungen der Formeln (i) bis (vii),

$CH_2=CH-(CF_2)_x-CH=CH_2$ (i)

$CH_2=CH-CH_2-(CF_2)_x-CH_2-CH=CH_2$ (ii)

$CF_2=CH-(CF_2)_x-CH=CF_2$ (iii)

$CF_2=CH-CH_2-(CF_2)_x-CH_2-CH=CF_2$ (iv)

$CF_2=CH-O-(CF_2)_x-O-CH=CF_2$ (v)

$CF_2=CF-O-(CF_2)_x-Q-CF=CF_2$ (vi)

$CF_2=CF-(CF_2)_x-CF=CF_2$ (vii),

wobei in den Formeln (i) bis (vii) x zwischen 2 bis 24 ist; und Verbindungen der Formeln (B) und (C),

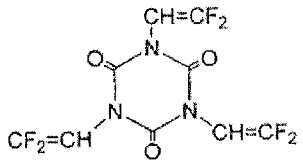

(B)

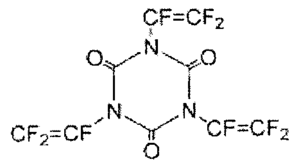

(C)

2. Verfahren zur Herstellung eines vernetzten Fluorelastomers nach Anspruch 1, wobei die Schutzgas-Atmosphäre eine Stickstoffatmosphäre ist.

3. Verfahren zur Herstellung eines vernetzten Fluorelastomers nach Anspruch 1 oder 2, wobei das Fluorelastomer ein Perfluorelastomer oder ein teilfluoriertes Elastomer ist.

4. Verfahren zur Herstellung eines vernetzten Fluorelastomers nach einem der Ansprüche 1 bis 3, wobei Z eine Alkylgruppe mit 1 bis 18 Kohlenstoffatomen ist, bei dem ein Teil oder alle davon fluoriert ist.

5. Verfahren zur Herstellung eines vernetzten Fluorelastomers nach einem der Ansprüche 1 bis 4, wobei das Vernetzungsmittel in einer Menge von 0,5 bis 15 mmol, bezogen auf 100 g des Fluorelastomers, zugesetzt wird.

6. Verfahren zur Herstellung eines vernetzten Fluorelastomers nach einem der Ansprüche 1 bis 5, wobei der Initiator in einer Menge von 0,3 bis 15 mmol, bezogen auf 100 g des Fluorelastomers, zugesetzt wird.

7. Verfahren zur Herstellung eines vernetzten Fluorelastomers nach einem der Ansprüche 1 bis 6, wobei Formel (1) eine der folgenden Formeln (2) bis (4) ist

$R_1R_2C=C(R_3)-(O)_n-Z-(O)_n-C(R_4)=CR_5R_6$ (2)

$R_1R_2C=C(R_3)-(CH_2)_mZ-(CH_2)_m-C(R_4)=CR_5R_6$ (3)

$R_1R_2C=C(R_3)-Z-C(R_4)=CR_5R_6$ (4)

wobei in den Formeln (2) bis (4) $R_1$, $R_2$, $R_3$, $R_4$, $R_5$ und $R_6$, Z, m und n die Gleichen wie in der Formel (1) sind.

8. Verfahren zur Herstellung eines vernetzten Fluorelastomers nach einem der Ansprüche 1 bis 6, wobei das Vernetzungsmittel ein oder mehrere ausgewählt aus der Gruppe bestehend aus den folgenden Verbindungen

$CF_2{=}CF\text{-}(CF_2)_x\text{-}CF{=}CF_2$,

$CF_2{=}CH\text{-}(CF_2)_x\text{-}CH{=}CF_2$,

und

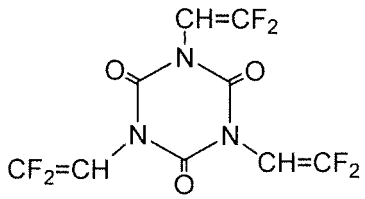

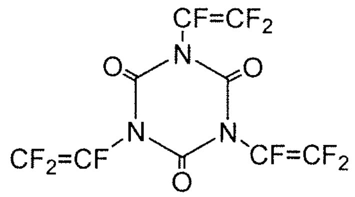

, wobei x zwischen 2 bis 24 ist, ist.

**9.** Vernetztes Fluorelastomer, welches durch das Herstellungsverfahren nach einem der Ansprüche 1 bis 8 erhalten wird.

**10.** Geformtes Produkt, erhalten aus dem vernetzten Fluorelastomer nach Anspruch 9.

**11.** Geformtes Produkt nach Anspruch 10, welches ein Dichtungsmaterial ist.

**Revendications**

**1.** Un procédé pour produire un fluoroelastomère réticulé, qui comprend réticuler un fluoroelastomère avec un agent de réticulation dans une atmosphère de gaz inerte en présence d'un initiateur, l'agent de réticulation étant un ou plusieurs choisi du groupe constitué de composés ayant la formule (1),

$$R_1R_2C{=}C(R_3)\text{-}(CH_2)_{m\text{-}}(O)_n\text{-}Z(O)_n(CH_2)_m\text{-}C(R_4){=}CR_5R_6 \qquad (1)$$

où dans la formule (1), $R_1R_2,R_3,R_4,R_5$ et $R_6$ sont le fluor; Z est un groupe de liaison divalente; m est indépendamment 0 ou 1; et n est indépendamment 0 ou 1; composés de formule (i) à (vii),

$CH_2{=}CH\text{-}(CF_2)_x\text{-}CH{=}CH_2$ (i)

$CH_2{=}CH\text{-}CH_2\text{-}(CF_2)_x\text{-}CH_2\text{-}CH{=}CH_2$ (ii)

$CF_2{=}CH\text{-}(CF_2)_x\text{-}CH{=}CF_2$ (iii)

$CF_2{=}CH\text{-}CH_2\text{-}(CF_2)_xCH_2\text{-}CH{=}CF_2$ (iv)

$CF_2{=}CH\text{-}O\text{-}(CF_2)O\text{-}CH{=}CF_2$ (v)

$CF_2{=}CF\text{-}O\text{-}(CF_2)_x\text{-}O\text{-}CF{=}CF_2$ (vi)

$CF_2{=}CF\text{-}(CF_2)_x\text{-}CF{=}CF_2$ (vii)

où dans les formules (i) à (vii), x est 2 à 24;
et les composés de formule (B), et (C),

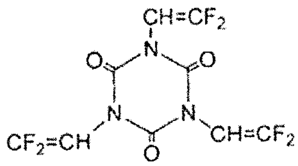

(B)

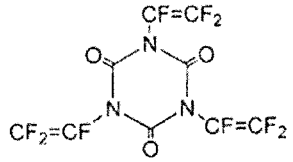

(C)

2. Le procédé pour produire un fluoroelastomère réticulé selon la revendication 1, dans lequel l'athmosphère de gaz inerte est une atmosphère de nitrogène.

3. Le procédé pour produire un fluoroelastomère réticulé selon la revendication 1 ou 2, dans lequel le fluoroelastomère est un fluoroelastomère perfluoré ou un élastomère partiellement fluoré.

4. Le procédé pour produire un fluoroelastomère réticulé selon l'une quelconque des revendications 1 à 3, dans lequel Z est un groupe d'alkyle ayant 1 à 18 atomes de carbone dans lequel une partie de ceux-ci ou tous sont fluorés.

5. Le procédé pour produire un fluoroelastomère réticulé selon l'une quelconque des revendications 1 à 4, dans lequel l'agent de réticulation est ajouté en une quantité de 0.5 à 15mmol par rapport à 100g de fluoroelastomère.

6. Le procédé pour produire un fluoroelastomère réticulé selon l'une quelconque des revendications 1 à 5, dans lequel l'initiateur est ajouté en une quantité de 0.3 à 15 mmol par rapport à 100g de fluoroelastomère.

7. Le procédé pour produire un fluoroelastomère réticulé selon l'une quelconque des revendications 1 à 6, dans lequel la formule (1) est une des formules suivantes (2 à 4) dans lequel dans les formules (2 à 4),

$$R_1R_2C=C(R_3)-(O)_n-Z-(O)_nC(R_4)=CR_5R_6 \quad (2)$$

$$R_1R_2C=C(R_3)-(CH_2)_m-Z-(CH_2)_m-C(R_4)=CR_5R_6 \quad (3)$$

$$R_1R_2C=C(R_3)-Z-C(R_4)=CR_5R_6 \quad (4)$$

où dans les formules (2) à (4), $R_1$,$R_2$,$R_3$,$R_4$,$R_5$ et $R_6$ sont les mêmes que dans la formule (1).

8. Le procédé pour produire un fluoroelastomère réticulé selon l'une quelconque des revendications 1 à 6, dans lequel l'agent de réticulation est un ou plusieurs choisi parmi le groupe constitué des composés suivants:

$CF_2=CF-(CF_2)_x-CF=CF_2$,

$CF_2=CH-(CF_2)_x-CH=CF_2$,

et

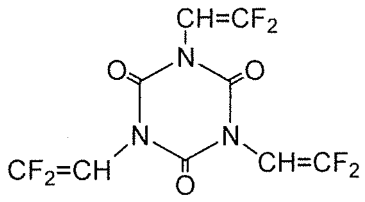

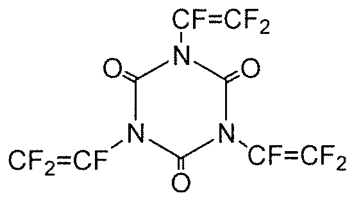

où x est 2 à 24.

9. Un fluoroelastomère réticulé qui est obtenu par le procédé de production selon l'une quelconque des revendications 1 à 8.

10. Un produit formé obtenu à partir du fluoroelastomère réticulé selon la revendication 9.

11. Un produit formé selon la revendication 10 qui est un matériau d'étanchéité.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006009010 A
- US 6191233 B1
- US 5696189 A
- EP 0570254 A1
- US 2005282969 A1